# EUROPÄISCHE PATENTANMELDUNG

(11) **EP 3 402 058 A1**
(43) Veröffentlichungstag der Anmeldung: **14.11.2018**
(21) Anmeldenummer: 18164914.6
(22) Anmeldetag: 29.03.2018
(51) Int. Cl.: H02K 17/16, H02K 15/02

(54) **ROTOR FÜR EINE ELEKTRISCHE MASCHINE, ELEKTRISCHE MASCHINE UMFASSEND EINEN SOLCHEN ROTOR SOWIE VERFAHREN ZUR HERSTELLUNG EINES ROTORS**

(30) Priorität: 08.05.2017 DE 102017207671
(71) Anmelder: AUDI AG, 85045 Ingolstadt (DE)
(72) Erfinder: Weber, Korbinian, 85049 Ingolstadt (DE); Rücker, Jörg, 91161 Hilpoltstein (DE); Suess, Peter, 85080 Gaimersheim (DE)

(57) **Zusammenfassung**

Rotor für eine elektrische Maschine, umfassend ein Blechpaket (2) mit mehreren durch dieses laufenden Kurzschlussstäben (4), die beidseits über jeweils einen Kurzschlussring (5) verbunden sind, wobei an jedem Kurzschlussring (5) axial eine Stützscheibe (7) aus einem Material, das eine höhere Festigkeit als das Material des Kurzschlussrings (5) aufweist, angeordnet ist.

## Beschreibung

Die Erfindung betrifft einen Rotor für eine elektrische Maschine, umfassend ein Blechpaket mit mehreren durch dieses laufenden Kurzschlussstäben, die beidseits über jeweils einen Kurzschlussring verbunden sind.

Ein solcher Rotor, oft auch als Läufer bezeichnet, kommt üblicherweise in einer Asynchronmaschine zum Einsatz. In einer solchen Asynchronmaschine läuft der Rotor dem magnetischen Drehfeld des ihn umgebenden Stators im Generatorbetrieb vor und im Elektromotorbetrieb nach. Üblich ist es, den Rotor als sogenannten Kurzschuss- oder Käfigläufer auszuführen, wozu das aus Einzelblechen gebildetes Blechpaket mit längslaufenden Kurzschlussstäben versehen wird, die an beiden Enden des Rotors über ringförmige Kurzschlussringe kurzgeschlossen sind. Die Kurzschlussstäbe sowie die Kurzschlussringe sind aus einem gut leitfähigen Material wie beispielsweise Kupfer oder Aluminium. Insbesondere bei der Massenfertigung werden die Kurzschlussstäbe und die Kurzschlussringe in einem Gießverfahren, üblicherweise einem Druckgussverfahren, unter Verwendung einer Gussform gegossen, wobei seitens des Blechpaketes entsprechende Nuten oder Kanäle vorgesehen werden, in die die Stäbe eingegossen werden, während zur Bildung der Kurzschlussringe entsprechende Kavitäten an der Gießform vorgesehen sind.

Da die hierfür verwendeten Werkstoffe wie Kupfer oder Aluminium eine verhältnismäßig geringe Festigkeit aufweisen, resultierend aus dem Umstand, dass sie einen möglichst geringen elektrischen Widerstand und eine hohe Leitfähigkeit aufweisen und daher in möglichst reiner Form verwendet werden, ist es erforderlich, Maßnahmen zur Stabilisierung der Kurzschussringe vorzusehen, damit es im Betrieb nicht zu aus der wirkenden Fliehkraft resultierenden Schwierigkeiten kommt. Denn zunehmend werden immer höhere Anforderungen an die Leistungsdichte, verbunden mit dem Wunsch, die Drehzahl elektrischer Maschinen und damit die Leistungsdichte zu steigern, gestellt. Das heißt, dass hohe Anforderungen an die Drehzahlfestigkeit gestellt werden. Um diese zu erfüllen, ist es bekannt, beispielsweise aus US 2014/0339950 A1, die Kurzschlussringe mit einem sie radial übergreifenden Stützring aus Stahl zu versehen, der über einen Querpressverband mit dem jeweiligen Kurzschlussring verbunden ist. Ein Problem eines solchen Querpressverbandes kann jedoch im Betrieb aufgrund der unterschiedlichen Wärmedehnungskoeffizienten der verwendeten Materialien entstehen, nachdem wie beschrieben der Kurzschlussring üblicherweise aus Kupfer oder Aluminium ist, während der Stützring aus Stahl ist. Aus diesem Grund ist ein solcher Querpressverband bei bestimmten Materialkombinationen unter Temperatureinfluss nicht darstellbar.

Neben dem Gießen der Kurzschlussstäbe und Kurzschlussringe ist es auch bekannt, die Kurzschlussstäbe und die Kurzschlussringe als separate Bauteile herzustellen und zunächst die Kurzschlussstäbe am Blechpaket anzuordnen, wonach die Kurzschussringe angesetzt werden und durch eine Schweißverbindung mit den Enden der Kurzschlussstäbe verbunden werden, wobei mitunter auch Kurzschlussstäbe und Kurzschussringe aus unterschiedlichen Materialien auf diese Weise kombiniert werden. Beispiele hierfür sind in DE 196 26 807 C1, DE 102 58 029 A1 oder DE 10 2014 208 887 A1 beschrieben.

Der Erfindung liegt das Problem zugrunde, einen Rotor anzugeben, der gegenüber bekannten Rotoren verbessert ist, um insbesondere die hohen Anforderungen an die Drehzahlfestigkeit zu erfüllen.

Zur Lösung dieses Problems ist bei einem Rotor der eingangs genannten Art erfindungsgemäß vorgesehen, dass an jedem Kurzschussring axial eine Stützscheibe aus einem Material, das eine höhere Festigkeit als das Material des Kurzschlussrings aufweist, angeordnet ist.

Bei dem erfindungsgemäßen Rotor wird, anders als bisher im Stand der Technik, keine radiale Abstützung über ein zusätzliches Stützbauteil vorgesehen, sondern eine axiale Abstützung. Hierzu wird auf jeden Kurzschussring axial eine ringförmige Stützscheibe aufgesetzt, das heißt, die Stützscheibe wird auf die axiale Stirnfläche des jeweiligen Kurzschlussrings aufgebracht. Die Stützscheibe selbst ist aus einem Material, das eine höhere Festigkeit aufweist als das Material des Kurzschlussrings. Diese Ausgestaltung führt dazu, dass der Rotor eine extrem hohe Drehzahlfestigkeit aufweist, ohne der Gefahr einer fliehkraftbedingten Deformation im Bereich der Kurzschlussringe, resultierend aus der Verwendung relativ weichen Ringmaterials. Denn es hat sich herausgestellt, dass die Kurzschussringe aus einem weichen Material wie beispielsweise Kupfer oder Aluminium bei hoher Drehzahl dazu tendieren, sich im Bereich ihres Innenumfangs axial gesehen nach außen zu wölben respektive nach außen zu biegen, mithin also im Bereich ihres Innenumfangs zu deformieren, was die Drehzahlfestigkeit stark einschränkt. Dem wirkt nun die erfindungsgemäße Lösung entgegen, indem eine axiale Stützscheibe aufgesetzt wirkt, die fest mit dem jeweiligen Kurzschussring verbunden ist und ein solches Aufwölben oder Aufbiegen verhindert, resultierend aus der höheren Festigkeit des Stützscheibenmaterials. Das heißt, dass das Stützscheibenmaterial andere Festigkeitseigenschaften aufweist, mithin also mechanisch fester bzw. stabiler ist als das demgegenüber weichere Kurzschlussringmaterial. Eine derartige axiale Abstützung oder Armierung verhindert folglich mit besonderem Vorteil eine aus hohen wirkenden Fliehkräften resultierende Deformation der Kurzschussringe, die bisher die Drehzahlfestigkeit stark begrenzt hat. Die Verwendung eines radialen Stützelements ist daher bei dem erfindungsgemäßen Rotor nicht mehr erforderlich. Gleichwohl ist auch die zusätzliche Anordnung der bisher bekannten radialen Stützringe nicht ausgeschlossen, sollte sie im Einzelfall zweckmäßig sein.

Bevorzugt ist der Rotor mit gegossenen Kurzschlussstäben und Kurzschlussringen ausgerüstet, die also in einem Gießverfahren, vorzugsweise in einem Druckgussverfahren, hergestellt wurden. Meist werden hierfür sehr reine Materialien wie Kupfer oder Aluminium verwendet, damit die Stäbe und Ringe eine hohe elektrische Leitfähigkeit aufweisen, verbunden jedoch mit einer relativ geringen Festigkeit/Dehngrenze, verglichen mit entsprechenden kupfer- oder aluminiumbasierten Legierungen, die zwar eine etwas höhere Festigkeit aufweisen, jedoch eine niedrigere elektrische Leitfähigkeit. Unabhängig davon, ob nun sehr reines Stab- und Ringmaterial verwendet wird, oder entsprechende Legierungen, ist zur Drehfestigkeitssteigerung die axiale Anordnung der Stütz- oder Armierungsringe in jedem Fall vorteilhaft.

Jede Stützscheibe ist bevorzugt über eine Schweißverbindung mit dem Kurzschlussring verbunden, so dass sich ein fester, quasi materialschlüssiger Verbund ergibt. Die Schweißverbindung kann durch unterschiedliche Verfahren hergestellt sein, beispielsweise durch Reibschweißen, Rührreibschweißen, Elektronenstrahlschweißen oder elektromagnetisches Pulsfügen. Es bilden sich je nach verwendetem Schweißverfahren an den Grenzflächen entweder plastische Phasen oder Schmelzphasen aus, die die quasi material- oder stoffschlüssige Verbindung bilden.

Bevorzugt ist darüber hinaus die Stützscheibe aus einem Material gefertigt, das eine höhe elektrische Leitfähigkeit als das Material des Kurzschlussrings aufweist. Dies bietet die Möglichkeit, dass auch die Stützscheibe zur elektrischen Leistungsfähigkeit der elektrischen Maschine beiträgt, wie auch zur mechanischen Festigkeit. Darüber hinaus besteht ein Vorteil darin, dass die axiale Dicke des Kurzschlussrings reduziert werden kann, da die Stützscheibe ihrerseits einen Beitrag zur elektrischen Leitfähigkeit des gesamten Käfigs liefert.

Die Stützscheiben sind bevorzugt aus einer Aluminium- oder Kupferlegierung. Insbesondere wenn die gegossenen Kurzschlussringe aus möglichst reinem Aluminium sind, ist die Verwendung von Stützscheiben aus einer Kupferlegierung wie beispielsweise einer CuCrZr-Legierung zweckmäßig. Denn die elektrische Leitfähigkeit einer solchen Kupferlegierung ist in der Regel höher als die des Aluminiums, verbunden mit einer höheren mechanischen Festigkeit respektive einem höheren E-Modul als sie der Aluminiumkurzschlussring aufweist.

Wie bereits beschrieben, hat sich herausgestellt, dass sich die weichen Kurzschlussringe primär an ihrem Innenumfang aufwölben. Aus diesem Zweck sieht eine Weiterbildung der Erfindung vor, dass jede ringförmige Stützscheibe einen Innen- und einen Außendurchmesser aufweist, wobei zumindest der Innendurchmesser dem Innendurchmesser des benachbarten Kurzschlussrings entspricht, und vorzugsweise auch der Außendurchmesser dem Außendurchmesser des benachbarten Kurzschlussrings entspricht. Stützscheibe und Kurzschlussring weisen also zumindest einen gleichen Innendurchmesser auf, so dass der Kurzschlussring in eben dem Bereich, der ohne Armierung zum Aufbiegen neigt, abgestützt ist und ein Aufbiegen verhindert ist. Die radiale Breite der Stützscheibe kann derart gewählt sein, dass der Außendurchmesser kleiner als der Außendurchmesser des benachbarten Kurzschussrings ist, oder maximal diesem entspricht. Im letzteren Fall ist folglich der Kurzschlussring über seine gesamte radiale Breite respektive die gesamte axiale Stirnfläche abgestützt.

Neben dem Rotor selbst betrifft die Erfindung ferner eine elektrische Maschine, umfassend einen Stator sowie einen Rotor der beschriebenen Art. Es handelt sich bei der elektrischen Maschine um eine Asynchronmaschine.

Des Weiteren betrifft die Erfindung ferner ein Verfahren zur Herstellung eines Rotors der beschriebenen Art, das sich durch folgende Schritte auszeichnet:
- Bereitstellen eines Blechpakets,
- Anbringen der Kurzschlussstäbe und der Kurzschlussringe,
- Anbringen der Stützscheiben axial an den Kurzschlussringen.

Die Kurzschlussstäbe und die Kurzschlussringe werden bevorzugt durch Gießen in einer Gießform hergestellt.

Die Stützscheiben ihrerseits werden in Weiterbildung der Erfindung durch Anschweißen mit den Kurzschlussringen verbunden, wozu sich Reibschweißen, Rührreibschweißen, Elektronenstrahlschweißen oder elektromagnetisches Pulsfügen anbietet.

Als Stützscheiben werden bevorzugt solche aus einer Aluminium- oder Kupferlegierung verwendet.

Weitere Vorteile und Einzelheiten der vorliegenden Erfindung ergeben sich aus den folgenden Ausführungsbeispielen sowie anhand der Zeichnungen. Dabei zeigen:
- Fig. 1: eine Prinzipdarstellung eines erfindungsgemäßen Rotors in einer Explosionsansicht mit separat zu den Kurzschlussringen gezeigten Stützscheiben, und
- Fig. 2: eine Ansicht eines erfindungsgemäßen Rotors mit an den Kurzschlussringen angebrachten Stützscheiben.

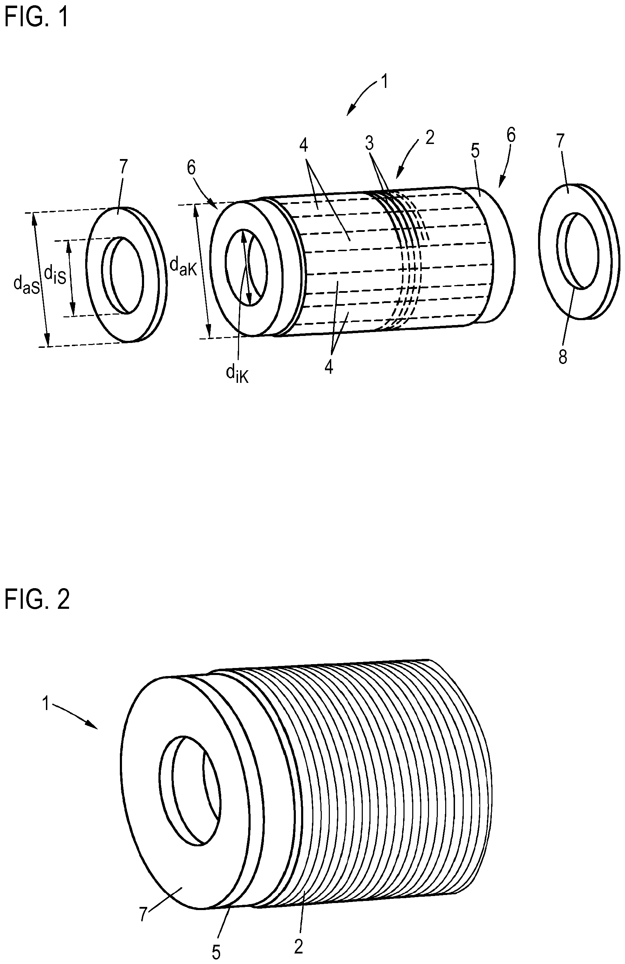

Fig. 1 zeigt eine Prinzipdarstellung eines erfindungsgemäßen Rotors 1 für eine elektrische Maschine in Form einer Asynchronmaschine. Der Rotor 1 besteht aus einem Blechpaket 2, das hier nur dem Grunde nach angedeutet ist, und das aus einer Vielzahl einzelner, axial aneinander anschließender Bleche 3 besteht. In dem Blechpaket 2 sind entsprechende Nuten oder Kanäle ausgebildet, in denen, hier nur gestrichelt angedeutet, Kurzschlussstäbe 4 aufgenommen sind, die an ihren Enden über jeweilige Kurzschlussringe 5, die an den entsprechenden Stirnseiten des Blechpakets 2 angeordnet sind, kurzgeschlossen sind. Das heißt, dass die Kurzschlussstäbe 4 direkt mit den Kurzschlussringen 5 verbunden sind. Bevorzugt sind die Kurzschlussstäbe 4 sowie die Kurzschlussringe 5 in einem Gussverfahren hergestellt, wozu das Blechpaket 2 in eine entsprechende Gießform eingesetzt wird. Über die Gießform werden, sofern erforderlich, die Nuten oder Kanäle, in denen die Kurzschlussstäbe 4 gegossen werden, definiert, insbesondere aber durch entsprechende Kavitäten in den Formteilen die Kurzschlussringe 5. Die Kurzschlussstäbe 4 sowie die Kurzschlussringe 5 werden aus einem eine hohe elektrische Leitfähigkeit aufweisenden Material gegossen, beispielsweise Aluminium oder Kupfer.

Nach Erzeugen der Kurzschlussstäbe 4 sowie der Kurzschlussringe 5 werden axial auf die Stirnflächen 6 der Kurzschlussringe 5 ringförmige Stützscheiben 7 aufgesetzt. Dies erfolgt über ein Schweißverfahren wie beispielsweise Reibschweißen, Rührreibschweißen, Elektronenstrahlschweißen oder elektromagnetisches Pulsfügen, wobei diese Aufzählung nicht abschließend ist. Der Innendurchmesser d_{iS} der Bohrungen 8 der Stützscheiben 7 entspricht dem Innendurchmesser d_{iK} der Kurzschlussringe 5, das heißt, dass beide bündig im Bereich des jeweiligen Innendurchmessers aneinander anschließen. Im gezeigten Beispiel entspricht auch der Außendurchmesser d_{aS} der Stützscheiben 7 dem Außendurchmesser d_{aK} der Kurzschlussringe 5. Das heißt, dass eine vollflächige Überdeckung der Stirnflächen 6 über die Stützscheiben 7 gegeben ist. Dies ist jedoch nicht zwingend.

Die Stützscheiben 7 selbst sind aus einem eine höhere mechanische Festigkeit respektive einen höheren E-Modul aufweisenden Material als die Kurzschlussringe 5. Sind die Kurzschlussringe 5 beispielsweise aus Aluminium, so werden zweckmäßigerweise Stützscheiben 7 aus einer Kupferlegierung, beispielsweise aus einer CuCrZr-Legierung verwendet, die eine höhere elektrische Leitfähigkeit aufweist als das Aluminium der Kurzschlussringe 5, sowie eine höhere mechanische Festigkeit respektive einen höheren E-Modul. Bevorzugt weisen die Stützscheiben 7 eine höhere elektrische Leitfähigkeit auf, dies ist jedoch nicht zwingend und hängt letztlich von der verwendeten Materialpaarung ab, also den jeweiligen Materialien der Kurzschussringe 5 sowie der Stützscheiben 7.

Infolge der quasi stoffschlüssigen Verbindung der Stützscheiben 7 mit den Kurzschlussringen 5 und dem Umstand, dass zumindest die Innendurchmesser der Stützscheiben 7 und der Kurzschlussringe 5 gleich sind, wird jeder Kurzschlussring 5 folglich axial über die Stützscheiben 7 abgestützt und armiert. Dies führt dazu, dass auch bei sehr hohen Drehzahlen und damit extrem hohen Fliehkräften, die auf das ansonsten relativ weiche Kurzschlussringmaterial wirken, die Kurzschlussringe 5 nicht deformiert werden, da die Stützscheiben 7 ein axiales Aufwölben im Bereich des Innendurchmessers d_{iK} der Kurzschlussringe 5 verhindern.

Fig. 2 zeigt einen Rotor 1, bei dem die Stützscheiben 7 an den Kurzschlussringen 5 über die Schweißverbindung befestigt sind. Ersichtlich ergibt sich eine vollflächige Überdeckung und damit eine vollflächige axiale Abstützung bzw. Armierung. Diese ermöglicht eine Stabilisierung der Kurzschlussringe 5 über das gesamte geforderte Temperaturfenster sowie das Betriebsdrehzahlband, in dem der Rotor betrieben wird.

Die exemplarisch beschriebenen Schweißverfahren lassen darüber hinaus verschiedenste Materialkombinationen von Kurzschlussringmaterial und Stützringmaterial zu, so dass unterschiedlichste Materialien zur Bildung der Kurzschlussringe 5 sowie der Stützscheiben 7 verwendet werden können.

## Patentansprüche

1. Rotor für eine elektrische Maschine, umfassend ein Blechpaket (2) mit mehreren durch dieses laufenden Kurzschlussstäben (4), die beidseits über jeweils einen Kurzschlussring (5) verbunden sind,
**dadurch gekennzeichnet,**
**dass** an jedem Kurzschlussring (5) axial eine Stützscheibe (7) aus einem Material, das eine höhere Festigkeit als das Material des Kurzschlussrings (5) aufweist, angeordnet ist.

2. Rotor nach Anspruch 1,
**dadurch gekennzeichnet,**
**dass** die Kurzschlussstäbe (4) und die Kurzschlussringe (5) gegossen sind.

3. Rotor nach Anspruch 2,
**dadurch gekennzeichnet,**
**dass** jede Stützscheibe (7) über eine Schweißverbindung mit dem Kurzschlussring (5) verbunden ist.

4. Rotor nach Anspruch 3,
**dadurch gekennzeichnet,**
**dass** die Schweißverbindung durch Reibschweißen, Rührreibschweißen, Elektronenstrahlschweißen oder elektromagnetisches Pulsfügen erzeugt ist.

5. Rotor nach einem der vorangehenden Ansprüche,
**dadurch gekennzeichnet,**
**dass** jede Stützscheibe (7) aus einem Material mit einer höheren elektrischen Leitfähigkeit als das Material des Kurzschlussrings (5) ist.

6. Rotor nach einem der vorangehenden Ansprüche,
**dadurch gekennzeichnet,**
**dass** jede Stützscheibe (7) aus einer Aluminium- oder Kupferlegierung ist.

7. Rotor nach einem der vorangehenden Ansprüche,
**dadurch gekennzeichnet,**
**dass** jede Stützscheibe (7) einen Innen- und einen Außendurchmesser (d_{iS}, d_{aS}) aufweist, wobei zumindest der Innendurchmesser (d_{iS}) dem Innendurchmesser (d_{iK}) des benachbarten Kurzschlussrings (7) entspricht, und vorzugsweise auch der Außendurchmesser (d_{aS}) dem Außendurchmesser (d_{aK}) des benachbarten Kurzschlussrings (5) entspricht.

8. Elektrische Maschine, umfassend einen Stator sowie einen Rotor (1) nach einem der vorangehenden Ansprüche.

9. Verfahren zur Herstellung eines Rotors nach einem der Ansprüche 1 bis 7, mit folgenden Schritten:
- Bereitstellen eines Blechpakets (2),
- Anbringen der Kurzschlussstäbe (4) und der Kurzschlussringe (5),
- Anbringen der Stützscheiben (7) axial an den Kurzschlussringen (5).

10. Verfahren nach Anspruch 9,
**dadurch gekennzeichnet,**
**dass** die Kurzschlussstäbe (4) und die Kurzschlussringe (5) durch Gießen in einer Gießform hergestellt werden.

11. Verfahren nach Anspruch 9 oder 10,
**dadurch gekennzeichnet,**
**dass** die Stützscheiben (7) durch Anschweißen mit den Kurzschlussringen (5) verbunden werden.

12. Verfahren nach Anspruch 11,
**dadurch gekennzeichnet,**
**dass** das Anschweißen durch Reibschweißen, Rührreibschweißen, Elektronenstrahlschweißen oder elektromagnetisches Pulsfügen erfolgt.

13. Verfahren nach einem der Ansprüche 9 bis 12,
**dadurch gekennzeichnet,**
**dass** Stützscheiben (7) aus einer Aluminium- oder Kupferlegierung verwendet werden.
